Europäisches Patentamt

European Patent Office

Office européen des brevets

(11) Veröffentlichungsnummer: **0 354 394**

**A1**

(12) **EUROPÄISCHE PATENTANMELDUNG**

(21) Anmeldenummer: **89113321.7**

(22) Anmeldetag: **20.07.89**

(51) Int. Cl.⁴: **B23Q 11/00**

(30) Priorität: **12.08.88 DE 8810261 U**

(43) Veröffentlichungstag der Anmeldung:
**14.02.90 Patentblatt 90/07**

(84) Benannte Vertragsstaaten:
**AT BE CH DE ES FR GB GR IT LI LU NL SE**

(71) Anmelder: **Kessler & Luch GmbH**
**Rathenaustrasse 8 Postfach 58 10**
**D-6300 Giessen 1(DE)**

(72) Erfinder: **Gersch, Dietfried, Dipl.-Ing.**
**Anger 43**
**D-6300 Giessen(DE)**
Erfinder: **Schäfer, Ralf, Dipl.-Ing.**
**Flutgrabenstrasse 19**
**D-6336 Solms/Albshausen(DE)**

(54) **Werkzeugmaschine zum spanabhebenden Bearbeiten eines metallischen Werkstücks.**

(57) Bei einer Werkzeugmaschine zum spanabhebenden Bearbeiten eines metallischen Werkstücks (2)
mit einem Werkzeug (1) und einer Werkstückaufnahme (3) ist als Neuerung vorgesehen eine mit Unterdruck beaufschlagbare Saugleitung (4), deren Saugöffnung (5) in dem Bereich angeordnet ist, in dem
der spanabhebende Bearbeitungsvorgang stattfindet.

*Fig. 2*

EP 0 354 394 A1

Xerox Copy Centre

## Werkzeugmaschine zum spanabhebenden Bearbeiten eines metallischen Werkstücks

Die Erfindung betrifft eine Werkzeugmaschine zum spanabhebenden Bearbeiten eines metallischen Werkstücks mit einem Werkzeug, einer Werkstückaufnahme und einer Einrichtung zur Erzeugung von den spanabhebenden Bearbeitungsvorgang hervorrufenden Relativbewegungen zwischen dem Werkzeug und der Werkstückaufnahme.

Die während des Bearbeitungsvorganges entstehenden Späne haben, je nach Werkstoff, eine unterschiedliche Länge, bevor sie irgendwann einmal abbrechen. Bisher hat man die Späne unkontrolliert aus demjenigen Bereich, in dem der spanabhebende Bearbeitungsvorgang stattfindet, herausfallen lassen. Sie wurden in offenen Behältern gesammelt, die seitlich der Werkzeugmaschine angeordnet waren. Häufig wurde der Bearbeitungsvorgang durch die Späne gestört, insbesondere wenn letztere spiralförmig anfielen. Auch konnten die Späne mit der bereits bearbeiteten Oberfläche in Berührung treten. In beiden Fällen waren Beeinträchtigungen der Oberflächengüte die regelmäßige Folge.

Der Erfindung liegt die Aufgabe zugrunde, derartige Beeinträchtigungen des Bearbeitungsvorganges und der Oberflächengüte zu vermeiden.

Hierzu ist die erfindungsgemäße Werkzeugmaschine gekennzeichnet durch eine mit Unterdruck beaufschlagbare Saugleitung, deren Saugöffnung in demjenigen Bereich angeordnet ist, in dem der spanabhebende Bearbeitungsvorgang stattfindet.

Die Späne können also den Bereich, in dem der spanabhebende Bearbeitungsvorgang stattfindet, nicht mehr unkontrolliert verlassen, sondern werden kontrolliert erfaßt und abgesaugt. Dadurch werden Beeinträchtigungen der Oberflächengüte des Werkstücks zuverlässig vermieden. Besonders vorteilhaft ist es, die Erfassungsgeschwindigkeit der durch die Saugleitung erzeugten Senkenströmung so hoch zu wählen, daß die Späne bereits während ihrer Entstehung von der Senkenströmung erfaßt werden. Die Späne erhalten also überhaupt keine Möglichkeit, sich in einer anderen Richtung als der der Senkenströmung zu bewegen.

Das Einsaugen der Späne wird dadurch erleichtert, daß die Saugöffnung als trichterförmige Erweiterung der Saugleitung ausgebildet ist. Ferner ist zur Gewährleistung eines besonders störungsfreien Abtransports die Saugleitung als glattes Rohr, vorzugsweise aus Plexiglas ausgebildet.

In aller Regel wird der Bearbeitungsvorgang unter Zufuhr einer Kühlflüssigkeit durchgeführt. Letztere wird automatisch zusammen mit den Spänen abgesaugt. Dementsprechend ist es besonders vorteilhaft, daß die Saugleitung an einen Abscheidebehälter angeschlosen ist, der unter Zwischenschaltung eines Filters mit einer Unterdruckquelle in Verbindung steht. In diesem Abscheidebehälter kann die Kühlflüssigkeit problemlos zurückgewonnen werden. Das Filter sorgt dafür, daß keine Kühlflüssigkeit und keine kleinen Späne in die Unterdruckquelle hineingerissen werden. Ferner bietet der Abscheidebehälter die Möglichkeit, die Späne über einige Zeit zwischenzulagern.

Erfindugnsgemäß kann das Filter eingangsseitig ein Lochblech, ausgangsseitig eine Lage aus Streckmetall und dazwischen eine Filtermatte aufweisen. Es wurde gefunden, daß diese sehr einfache Ausbildung den auftretenden Anforderungen in vollem Umfange gerecht wird.

Nach einem weiteren vorteilhaften Merkmal der Erfindung ist mindestens ein Teil einer Wand des Abscheidebehälters als herausnehmbares Sichtfenster ausgebildet. Damit lassen sich zum einen Funktion und Füllungsgrad überwachen und zum anderen ggf. erforderliche Reinigungsarbeiten oder sonstige Eingriffe in einfacher Weise durchführen.

Die Erfindung wird im folgenden anhand eines bevorzugten Ausführungsbeispiels im Zusammenhang mit der beiliegenden Zeichnung näher erläutert. Die Zeichnung zeigt in:

Fig. 1 eine schematische Seitenansicht einer Werkzeugmaschine nach der Erfindung:

Fig. 2 einen vergrößerten Ausschnitt aus Fig. 1.

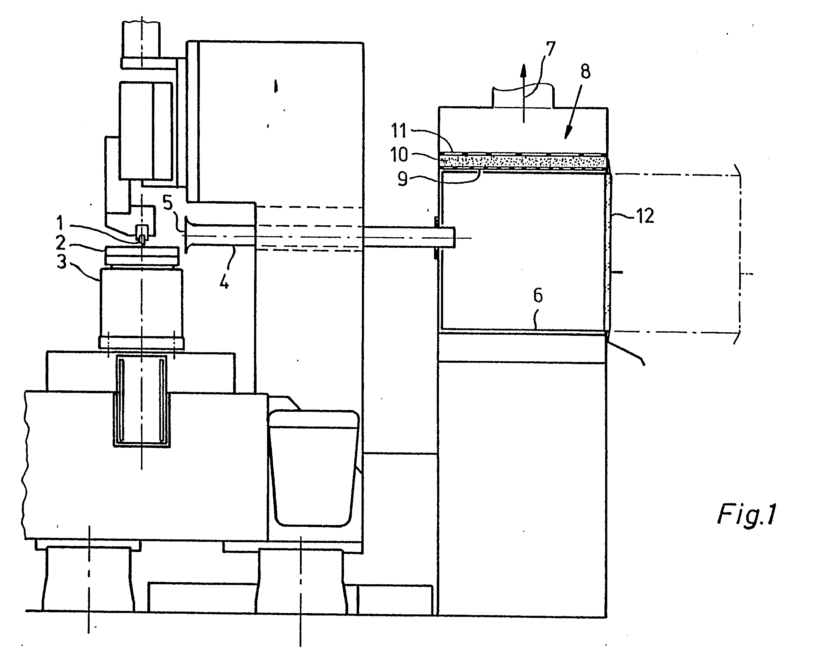

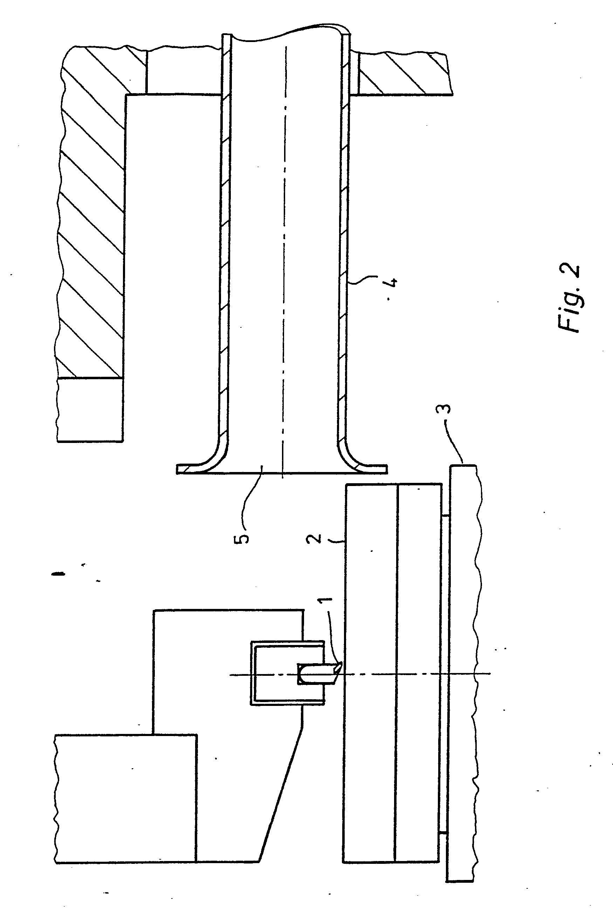

Gemäß Fig. 1 und 2 weist die Werkzeugmaschine ein Werkzeug 1 auf, mit welchem ein metallisches Werkstück 2 spanabhebend bearbeitet wird. Das Werkstück 2 ist auf einer Werkstückaufnahme 3 aufgespannt. Ferner sind übliche Einrichtungen zur Erzeugung von Relativbewegungen zwischen dem Werkzeug 1 und dem Werkstück 2 vorhanden, die den spanabhebenden Bearbeitungsvorgang ermöglichen.

Erfindungsgemäß ist ein Saugrohr 4 vorgesehen, dessen trichterförmig erweiterte Saugöffnung 5 in demjenigen Bereich liegt, in welchem der Bearbeitungsvorgang stattfindet. In der Saugleitung 4 wird ein Unterdruck erzeugt, so daß sich vor der Saugöffnung 5 eine Senkenströmung ergibt. Letztere besitzt eine derartig hohe Erfassungsgeschwindigkeit, daß die Späne bereits während ihrer Entstehung erfaßt und nach ihrem Abbrechen in die Saugöffnung hineingezogen werden. Die Saugleitung 4 ist als glattes Plexiglasrohr ausgebildet.

Die Saugleitung 4 ist an einen Abscheidebehälter 6 angeschlossen, der zum Abscheiden der üblicherweise verwendeten Kühlflüssigkeit sowie zur Zwischenlagerung der Späne dient. Der Abscheidebehälter 6 steht, wie es durch einen Pfeil 7 angedeu tet ist, mit einer nicht dargestellten Unterdruckquelle in Verbindung, und zwar über ein Filter 8, welches aus einem Lochblech 9, einer Filtermatte 10 und einer Lage aus Streckmetall 11 zusammengesetzt ist. Dieses Filter 8 verhindert in zuverlässigerweise das Mitreißen von Kühlflüssigkeit und kleinen Spänen.

Die rechte Wand des Abscheidebehälters 6 ist als herausnehmbares Sichtfenster 12 aus Plexiglas ausgebildet. Das Sichtfenster 12 ermöglicht eine Überwachung der Vorgänge innerhalb des Abscheidebehälters und schafft Zugang zu letzterem. Auch kann an dieser Stelle, sofern keine anderen Vorkehrungen getroffen sind, die Entnahme der Späne und/oder der Kühlflüssigkeit erfolgen.

**Ansprüche**

1. Werkzeugmaschine zum spanabhebenden Bearbeiten eines metallischen Werkstücks (2) mit einem Werkzeug (1), einer Werkstückaufnahme (3) und einer Einrichtung zur Erzeugung von den spanabhebenden Bearbeitungsvorgang hervorrufenden Relativbewegungen zwischen dem Werkzeug (1) und der Werkstückaufnahme (3), gekennzeichnet durch eine mit Unterdruck beaufschlagbare Saugleitung (4), deren Saugöffnung (5) in demjenigen Bereich angeordnet ist, in dem der spanabhebende Bearbeitungsvorgang stattfindet.

2. Werkzeugmaschine nach Anspruch 1, dadurch gekennzeichnet, daß die Saugöffnung (5) als trichterförmige Erweiterung der Saugleitung (4) ausgebildet ist.

3. Werkzeugmaschine nach Anspruch 1 oder 2, dadurch gekennzeichnet, daß die Saugleitung (4) als glattes Rohr, vorzugsweise aus Plexiglas, ausgebildet ist.

4. Werkzeugmaschine nach einem der Ansprüche 1 bis 3, dadurch gekennzeichnet, daß die Saugleitung (4) an einen Abscheidebehälter (6) angeschlossen ist, der unter Zwischenschaltung eines Filters (8) mit einer Unterdruckquelle in Verbindung steht.

5. Werkzeugmaschine nach Anspruch 4, dadurch gekennzeichnet, daß das Filter (8) eingangsseitig ein Lochblech (9), ausgangsseitig eine Lage aus Streckmetall (11) und dazwischen eine Filtermatte (10) aufweist.

6. Werkzeugmaschine nach Anspruch 4 oder 5, dadurch gekennzeichnet, daß mindestens ein Teil einer Wand des Abscheidebehälters (6) als herausnehmbares Sichtfenster (12) ausgebildet ist.

Fig.1

EP 0 354 394 A1

Fig. 2

EP 0 354 394 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 533 327 (HAGERTY) * Spalte 2, Zeile 17 - Spalte 5, Zeile 25; Figuren 1-5 * | 1,2 | B 23 Q 11/00 |
| A | --- | 3,4,6 | |
| X | US-A-2 420 905 (T. C. OLSEN) * Spalte 2, Zeilen 26-45; Spalte 4, Zeilen 16-32; Anspruch 1; Figur 1 * --- | 1,4,5 | |
| A | EP-A-0 078 383 (TELDEC) * Anspruch 1; Figur 1 * --- | 1,3,4 | |
| A | US-A-3 837 383 (K. KO) * Spalte 3, Zeilen 30-37 * --- | 1,3 | |
| A | DE-U-7 103 133 (B. RINGLER) * Anspruch 1; Seite 5, Zeilen 1-4; Figuren 1,2 * --- | 4,5 | |
| A | DE-U-7 709 768 (RENFERT) * Ansprüche 1,2; Figuren 1,2 * --- | 6 | RECHERCHIERTE SACHGEBIETE (Int. Cl.5) |
| P,X | DE-U-8 810 261 (KESSLER & LUCH) * gesamtes Dokument * ----- | 1-6 | B 23 Q 11/00 |

Der vorliegende Recherchenbericht wurde für alle Patentansprüche erstellt

| Recherchenort | Abschlußdatum der Recherche | Prüfer |
|---|---|---|
| BERLIN | 08-11-1989 | MARTIN A E W |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................................
& : Mitglied der gleichen Patentfamilie, übereinstimmendes
    Dokument

EPO FORM 1503 03.82 (P0403)